# EUROPÄISCHE PATENTSCHRIFT

(11) **EP 0 973 958 B1**
(45) Veröffentlichungstag und Bekanntmachung des Hinweises auf die Patenterteilung: **02.07.2003**
(21) Anmeldenummer: 98922674.1
(22) Anmeldetag: 09.04.1998
(51) Int. Cl.: C23C 18/12, C03C 1/00

(54) **VERFAHREN ZUM VERSEHEN EINER METALLISCHEN OBERFLÄCHE MIT EINER GLASARTIGEN SCHICHT**
METHOD FOR PROVIDING A METAL SURFACE WITH A VITREOUS LAYER
PROCEDE POUR MUNIR UNE SURFACE METALLIQUE D'UNE COUCHE VITREUSE

(30) Priorität: 10.04.1997 DE 19714949
(43) Veröffentlichungstag der Anmeldung: 26.01.2000
(60) Teilanmeldung: 02025558.4
(73) Patentinhaber: INSTITUT FÜR NEUE MATERIALIEN GEM. GMBH, 66123 Saarbrücken (DE)
(72) Erfinder: MENNIG, Martin, D-66287 Saarbrücken (DE); JONSCHKER, Gerhard, D-66583 Spiesen-Elversberg (DE); SCHMIDT, Helmut, D-66130 Saarbrücken (DE)
(74) Vertreter: Barz, Peter
(86) Internationale Anmeldenummer: EP9802076
(87) Internationale Veröffentlichungsnummer: WO98045502

(56) Entgegenhaltungen:
- EP-A- 0 327 311
- WO-A-95/13249
- CHEMICAL ABSTRACTS, vol. 124, no. 2, 8.Januar 1996 Columbus, Ohio, US; abstract no. 11139, KOJIMA, HIROSHI ET AL: "Silicate-based coatings with excellent resistance to staining by food" XP002072046 & JP 07 228 840 A (UBE INDUSTRIES, JAPAN)
- CHEMICAL ABSTRACTS, vol. 113, no. 22, 26.November 1990 Columbus, Ohio, US; abstract no. 193572, KURAMOTO, SHIGEFUMI ET AL: "Fine silica sphere-containing alkoxysilane coatings" XP002072047 & JP 02 097 581 A (NIPPON SHOKUBAI KAGAKU KOGYO CO., LTD., JAPAN)

## Beschreibung

Die vorliegende Erfindung betrifft ein Verfahren zum Versehen einer metallischen Oberfläche mit einer glasartigen Schicht.

Glasartige Schichten auf zum Beispiel Stählen werden in der Regel über Emaillierungsprozesse hergestellt. Zu diesem Zweck wird eine Haftschicht und anschließend daran über eine Suspension (Engobe) eine partikelhaltige Zusammensetzung aufgetragen, die beim Erhitzen zu einem Glas aufschmilzt. In der Regel handelt es sich hierbei um bleihaltige Glassysteme (zwecks Erniedrigung des Schmelzpunktes), die durch einen relativ hohen Alkaligehalt gekennzeichnet sind, der dazu dient, den Ausdehnungskoeffizienten des Glases demjenigen des Stahls anzupassen. Dies hat aber auch den Nachteil, daß die resultierenden Emailschichten in ihrer chemischen Beständigkeit meistens nicht voll zufriedenstellend sind. Um geschlossene dichte Schichten zu erhalten, müssen die Schichtdicken in der Regel über 50 µm liegen. Dadurch werden die Schichten unflexibel und spröde und sind dadurch gegenüber Biegen, Schlag und Stoß empfindlich (platzen ab). Eine andere Methode ist das galvanische Abscheiden von Chromoxidinterferenzschichten. Diese Schichten sind jedoch nicht kratzfest und wegen ihrer Interferenzfarbwirkung sehr empfindlich in Bezug auf Verschmutzung und Fingerabdrücke.

Es wurden viele Untersuchungen bezüglich des Auftragens dünner Schichten auf Stahloberflächen über Sol-Gel-Techniken durchgeführt. So wurde zum Beispiel versucht, Zirkondioxid-Schichten zwecks Verbesserung der Korrosionsbeständigkeit auf Edelstahloberflächen vorzusehen. Borosilikatglas-Schichten wurden ebenfalls untersucht. Es zeigte sich jedoch, daß die refraktären Systeme (hochschmelzende Oxide wie ZrO₂) über diese Techniken nicht zu dichten Schichten führten und daß die Borosilikatglas-Schichten nur in Schichtdicken deutlich unter 1 µm auftragbar waren, so daß ein ausreichender mechanischer und chemischer Schutz nicht gewährleistet werden konnte. JP-A-7-228840 beschreibt ein Verfahren zum Versehen einer metallischen Oberfläche mit einer glasartigen Schicht durch die Hydrolyse und Polykondensation von Silanen. Erfindungsgemäß wurde nun gefunden, daß unter Verwendung spezieller, organisch modifizierter Systeme auf SiO₂-Basis glasartige Schichten auf metallischen Oberflächen herstellbar sind, deren Dicke bis zu 10 µm betragen kann, ohne daß bei der Trocknung und beim Verdichten Rißbildung auftritt. Dieser Effekt wird dem verbesserten Relaxationsverhalten der organisch modifizierten Kieselgel- bzw. Kieselsäuregerüste zugeschrieben. Überraschenderweise hat sich auch herausgestellt, daß solche Schichten schon bei relativ niedrigen Temperaturen ( ab 400°C) in dichte SiO₂-Filme (zum Beispiel auf Edelstahl- oder Stahloberflächen) umgewandelt werden können. Derartige Filme sind in der Regel 3 bis 5 µm dick und bilden eine hermetisch abschließende Schicht, die auch bei höheren Temperaturen den Sauerstoffzutritt an die metallische Oberfläche verhindert bzw. drastisch reduziert und einen hervorragenden Korrosionsschutz gewährleistet. Außerdem sind derartige Schichten abriebfest, so daß zum Beispiel mit Stahlwolle auf deren Oberfläche gerieben werden kann, ohne daß Spuren hinterlassen werden. Auch nach 1000 Zyklen Taber-Abrader-Test (CS-10F, 500 g) zeigen sich nur kaum sichtbare Spuren. Darüber hinaus sind sie flexibel, d.h. Biegungen oder Abknickungen der Oberfläche führen zu keinerlei Rissen oder anderweitigen Beeinträchtigungen der Schichten.

Weiter sind die Schichten glasklar und transparent und können so aufgetragen werden, daß die metallische Oberfläche in ihrem Aussehen nicht verändert wird. So ist es zum Beispiel möglich, auf Edelstahlbauteilen derartige Schichten aufzutragen, ohne daß eine Veränderung des Aussehens eintritt.

Schließlich können über derartigen glasartigen Schichten weitere, bereits bekannte gefärbte glasartige Schichten vorgesehen werden, zum Beispiel dünne kolloidgefärbte glasartige Schichten. Da derartige gefärbte glasartige Schichten vorzugsweise mit Hilfe von Beschichtungszusammensetzungen hergestellt werden, die zum Beispiel Precursoren für Metallkolloide enthalten, läßt sich dadurch auch verhindern, daß die metallische Oberfläche (bzw. die daraus abgelösten Metallionen) die Reaktionen der Metallkolloid-Precursoren etc. beeinträchtigt bzw. beeinflußt, da kein direkter Kontakt zwischen der metallischen Oberfläche und der gefärbten glasartigen Schicht vorliegt.

Außerdem können zur Herstellung der erfindungsgemäß bereitgestellten Schichten Silane mit fluorhaltigen Seitenketten verwendet werden, was zu einer Niedrigenergieoberfläche führt.

Konkret stellt die vorliegende Erfindung ein Verfahren zum Versehen einer metallischen Oberfläche mit einer glasartigen Schicht bereit, das dadurch gekennzeichnet ist, daß man eine Beschichtungszusammensetzung, die durch ein Verfahren umfassend die Hydrolyse und Polykondensation eines oder mehrerer Silane der allgemeinen Formel (I)

RₙSiX₄₋ₙ (I)

worin die Gruppen X, gleich oder verschieden voneinander, hydrolysierbare Gruppen oder Hydroxylgruppen sind, die Reste R, gleich oder verschieden voneinander, für Wasserstoff, Alkyl-, Alkenyl- und Alkinylgruppen mit bis zu 12 Kohlenstoffatomen und Aryl-, Aralkyl- und Alkarylgruppen mit 6 bis 10 Kohlenstoffatomen stehen und n 0, 1 oder 2 ist, mit der Maßgabe, daß mindestens ein Silan mit n = 1 oder 2 verwendet wird, oder davon abgeleiteter Oligomere, in Anwesenheit
a) nanoskaliger SiO₂-Teilchen und/oder
b) mindestens einer Verbindung aus der Gruppe der Oxide und Hydroxide der Alkaliund Erdalkalimetalle
   erhältlich ist,
   auf die metallische Oberfläche aufbringt und die resultierende Beschichtung - gegebenenfalls (und vorzugsweise) nach vorangehender Trocknung - thermisch zu einer glasartigen Schicht verdichtet.

Unter den oben erwähnten "nanoskaligen SiO₂-Teilchen" werden im vorliegenden Zusammenhang SiO₂-Teilchen mit einer durchschnittlichen Teilchengröße (bzw. einem durchschnittlichen Teilchendurchmesser) von nicht mehr als 200 nm, vorzugsweise nicht mehr als 100 nm und insbesondere nicht mehr als 50 nm verstanden, wobei eine Obergrenze von 30 nm besonders bevorzugt ist.

Im folgenden wird das erfindungsgemäße Verfahren in Einzelheiten erläutert.

Unter den obigen Silanen der allgemeinen Formel (I) befindet sich mindestens ein Silan, in dessen Formel n den Wert 1 oder 2 aufweist. In der Regel werden mindestens zwei Silane der allgemeinen Formel (I) in Kombination eingesetzt. In diesem Fall werden diese Silane in einem solchen Verhältnis eingesetzt, daß das Verhältnis R:Si, d.h. der Durchschnittswert von n (auf molarer Basis), 0,2 bis 1,5, vorzugsweise 0,5 bis 1,0, beträgt. Besonders bevorzugt liegt der Durchschnittswert von n im Bereich von 0,6 bis 0,8.

In der allgemeinen Formel (I) sind die Gruppen X, die gleich oder verschieden voneinander sein können, hydrolysierbare Gruppen oder Hydroxylgruppen. Konkrete Beispiele für hydrolysierbare Gruppen X sind Halogenatome (insbesondere Chlor und Brom), Alkoxygruppen und Acyloxygruppen mit bis zu 6 Kohlenstoffatomen. Besonders bevorzugt werden Alkoxygruppen, insbesondere C₁₋₄-Alkoxygruppen wie Methoxy, Ethoxy und n- und i-Propoxy. Vorzugsweise sind die Gruppen X in einem konkreten Silan identisch, wobei besonders bevorzugt Methoxy- oder Ethoxygruppen eingesetzt werden.

Bei den Gruppen R in der allgemeinen Formel (I), die im Falle von n = 2 gleich oder identisch sein können, handelt es sich um Wasserstoff, Alkyl-, Alkenyl- und Alkinylgruppen mit bis zu 12 (in der Regel bis zu 8 und vorzugsweise bis zu 4) Kohlenstoffatomen und Aryl-, Aralkyl- und Alkarylgruppen mit 6 bis 10 Kohlenstoffatomen. Konkrete Beispiele für derartige Gruppen sind Methyl, Ethyl, Propyl und Butyl, Vinyl, Allyl und Propargyl, Phenyl, Tolyl, Benzyl und Naphthyl. In der Regel tragen die Gruppen R keine Substituenten. Wie bereits oben erwähnt, kann es jedoch von Vorteil sein, als Gruppen R zumindest teilweise solche einzusetzen, die Fluoratome aufweisen, insbesondere Alkylgruppen und Arylgruppen mit Fluoratomen (vorzugsweise jedoch nicht an C-Atomen, die sich in α- oder β-Stellung zum Si befinden). Die entsprechenden Alkylgruppen weisen vorzugsweise mehr als 3 Kohlenstoffatome auf und sind mit Ausnahme der α- und β-C-Atome vorzugsweise perfluoriert.

Bevorzugte Gruppen R sind (unsubstituierte) Alkylgruppen mit 1 bis 4 Kohlenstoffatomen, insbesondere Methyl und Ethyl, sowie Phenyl; sowie zusätzlich fluorierte Alkylgruppen mit 4 bis 12 Kohlenstoffatomen.

Erfindungsgemäß bevorzugt ist es, wenn mindestens zwei Silane der allgemeinen Formel (I) eingesetzt werden, wobei in mindestens einem Fall n = 0 und im anderen Fall n = 1. Derartige Silan-Mischungen umfassen zum Beispiel mindestens ein Alkyltrialkoxysilan (z.B. (M)ethyltri(m)ethoxysilan) und mindestens ein Tetraalkoxysilan (z.B. Tetra(m)ethoxysilan), die vorzugsweise in einem solchen Verhältnis eingesetzt werden, daß der Durchschnittswert von n in den oben angegebenen bevorzugten Bereichen liegt.

Die gemäß Variante (a) des erfindungsgemäßen Verfahrens zusätzlich zu den hydrolysierbaren Silanen der allgemeinen Formel (I) verwendeten nanoskaligen SiO₂-Teilchen werden vorzugsweise in einer solchen Menge eingesetzt, daß das Verhältnis aller Si-Atome in den Silanen der allgemeinen Formel (I) zu allen Si-Atomen in den nanoskaligen SiO₂-Teilchen im Bereich von 5:1 bis 1:2, insbesondere von 4:1 bis 2:1, liegt. Derartige nanoskalige SiO₂-Teilchen können beispielsweise in Form von handelsüblichen Kieselsolen (z.B. von der Firma Bayer erhältlich) eingesetzt werden.

Alternativ oder zusätzlich (vorzugsweise alternativ) zur Anwesenheit der nanoskaligen SiO₂-Teilchen kann die Hydrolyse und Polykondensation des oder der Silane der allgemeinen Formel (I) in Anwesenheit mindestens einer Verbindung aus der Gruppe der Oxide und Hydroxide der Alkali- und Erdalkalimetalle durchgeführt werden. Bei diesen Oxiden und Hydroxiden handelt es sich vorzugsweise um solche von Li, Na, K, Mg, Ca und/oder Ba. Besonders bevorzugt werden Alkalimetallhydroxide, insbesondere NaOH und KOH, verwendet. Bei Verwendung eines Alkalimetalloxids bzw. -hydroxids wird dieses vorzugsweise in einer solchen Menge eingesetzt, daß das Atomverhältnis Si:Alkalimetall im Bereich von 20:1 bis 5:1, inbesondere von 15:1 bis 10:1, liegt. In jedem Fall wird das Atomverhältnis von Silicium zu (Erd)alkalimetall so (groß) gewählt, daß der resultierende Überzug im wesentlichen nicht wasserlöslich ist .

Es wird davon ausgegangen, daß auch im Fall der Variante (b) des erfindungsgemäßen Verfahrens (im Falle von Variante (a) als solche eingesetzte) nanoskalige SiO₂-Teilchen vorliegen, d.h. sich in situ bilden, so daß zwischen den Varianten (a) und (b) kein prinzipieller Unterschied besteht. Vielmehr wird angenommen, daß die Anwesenheit von nanoskaligen SiO₂-Teilchen im Überzug von essentieller Bedeutung für die Erzielung ausreichender Schichtdicken ist. Ebenso wird angenommen, daß die Anwesenheit von Gruppen R in den Ausgangssilanen u.a. dazu dient, eine zu starke Vernetzung des organischen SiO₂-Gerüstes (und damit eine zu starke Versteifung bzw. Versprödung der Schicht) zu verhindern.

Der Unterschied zwischen den obigen Varianten (a) und (b) besteht - wenn überhaupt - darin, daß im Fall der Variante (a) die Hydrolyse und Polykondensation der Silane der allgemeinen Formel (I) in der Regel sauer katalysiert wird, wobei als Katalysatoren (vorzugsweise anorganische) Säuren wie beispielsweise Salzsäure, Salpetersäure und (bevorzugt) Phosphorsäure Verwendung finden. Im Gegensatz dazu finden bei Variante (b) die Hydrolyse und Polykondensation offensichtlich im alkalischen Milieu statt, was insbesondere dann von Vorteil ist, wenn gegen Angriff von Säuren nicht oder nur wenig beständige metallische Oberflächen (z.B. aus Stahl) nach dem erfindungsgemäßen Verfahren mit einem glasartigen Überzug versehen werden sollen. Ein weiterer Vorteil der Variante (b) ist, daß durch den (Erd)alkalianteil die Verdichtung verbessert wird, so daß die Beschichtung z.B. in Luftatmosphäre vorgenommen werden kann, ohne daß die darunterliegende metallische (z.B. Edelstahl-) Oberfläche Schaden nimmt (anläuft}. Mit Variante (b) gelingt es ferner, auch Baustahl (z.B. ST37, ST50) mit einer glasartigen Schicht zu versehen, ohne daß der Stahl beim Verdichten der Schicht anläuft, wenn dies unter Luftabschluß erfolgt (N₂-Atmosphäre).

Die auf die metallische Oberfläche aufgebrachte Beschichtungszusammensetzung wird anschließend thermisch zu einer glasartigen Schicht verdichtet. Vor dieser thermischen Verdichtung wird normalerweise eine herkömmliche Trocknung der Beschichtungszusammensetzung bei Raumtemperatur und/oder leicht erhöhter Temperatur (beispielsweise einer Temperatur von bis zu 100°C, insbesondere bis zu 80°C) durchgeführt.

Obwohl sich die (End)temperatur bei der thermischen Verdichtung auch an der Wärmebeständigkeit der metallischen Oberfläche orientieren muß, liegt diese Temperatur bei mindestens 350°C, insbesondere mindestens 400°C und besonders bevorzugt mindestens 500°C. Wenn die metallische Oberfläche insbesondere bei diesen hohen Temperaturen oxidationsempfindlich ist, empfiehlt es sich, die thermische Verdichtung in einer sauerstofffreien Atmosphäre, z.B. unter Stickstoff oder Argon, durchzuführen.

Die nach der thermischen Verdichtung erzielte Dicke der glasartigen Schicht liegt erfindungsgemäß vorzugsweise im Bereich von 1 bis 10 µm, insbesondere 2 bis 7 µm und besonders bevorzugt 3 bis 5 µm.

Wie bereits oben erwähnt, kann auf der nach dem erfindungsgemäßen Verfahren hergestellten (transparenten und farblosen) glasartigen Schicht (mindestens) eine weitere (glasartige) Schicht vorgesehen werden, zum Beispiel eine funktionelle glasartige Schicht, wie sie in der internationalen Patentanmeldung EP-A-729442) oder in der DE-A-19645043 beschrieben ist.

Derartige weitere Schichten werden zum Beispiel dadurch aufgebracht, daß man eine Zusammensetzung, die erhältlich ist durch Hydrolyse und Polykondensation bestimmter (funktionalisierter) Silane mit mindestens einem Funktionsträger aus der Gruppe der temperaturbeständigen Farbstoffe und Pigmente, Metall- oder Nichtmetalloxide, färbenden Metallionen, Metall- oder Metallverbindungs-Kolloide und Metallionen, die unter Reduktionsbedingungen zu Metallkolloiden reagieren, vermischt, die mit dem Funktionsträger vermischte Zusammensetzung auf die zu beschichtende Oberfläche aufbringt und den Überzug thermisch zu einer (gefärbten) glasartigen Schicht verdichtet. Alternativ kann eine (gefärbte) Schicht vorgesehen werden, indem man eine Beschichtungszusammensetzung, die mindestens ein Element, das ein glasartiges, kristallines oder teilkristallines Oxid bilden kann, in Form einer Verbindung, die bei der thermischen Behandlung dieses Oxid liefern kann und in einem zumindest vorwiegend wäßrigen Medium als Lösung oder Sol vorliegt, als matrixbildende Komponente und mindestens ein Mitglied aus der Gruppe der Metall-, Metallverbindungs- und Metallegierungskolloide und der Metallverbindungen, die unter reduzierenden Bedingungen Metallkolloide bilden können, als farbgebende Komponente enthält, auf die zu beschichtende Oberfläche aufbringt und den resultierenden Überzug thermisch härtet. Als Elemente, die ein glasartiges, kristallines oder teilkristallines Oxid bilden können, können zum Beispiel Ti und Zr genannt werden.

Eine derartige gefärbte glasartige Schicht kann auf der erfindungsgemäß hergestellten glasartigen Schicht z.B. dadurch vorgesehen werden, daß man den erfindungsgemäß auf der metallischen Oberfläche vorgesehenen Überzug vor seiner thermischen Verdichtung (und vorzugsweise nach seiner Trocknung bei Raumtemperatur und/oder erhöhter Temperatur) mit der Beschichtungszusammensetzung für die gefärbte glasartige Schicht versieht und die beiden Überzüge dann gemeinsam thermisch verdichtet. Selbstverständlich ist es auch möglich, farbgebende Komponenten (wie beispielsweise die oben genannten) direkt in die erfindungsgemäß zu verwendende Beschichtungszusammensetzung einzuverleiben, dies ist aber nicht bevorzugt.

Als erfindungsgemäß zu beschichtende metallische Oberfläche eignen sich alle aus einem Metall oder einer Metallegierung bestehenden (bzw. dieses oder diese umfassende) Oberflächen.

Als Beispiele für Metallegierungen wären insbesondere (Edel)stahl, Messing oder Bronze zu nennen, wobei die Beschichtung von Edelstahl erfindungsgemäß besonders bevorzugt wird.

Als Beispiele für metallische Oberflächen können solche aus Aluminium, Zinn, Zink, Chrom oder Nickel (einschließlich verzinkter und verchromter Oberflächen) genannt werden.

Vorzugsweise wird die metallische Oberfläche vor der Auftragung der Beschichtungszusammensetzung gründlich gereinigt (insbesondere von Fett und Staub befreit). Vor der Beschichtung kann auch eine Oberflächenbehandlung (z.B. durch Aufrauhen oder Corona-Entladung) durchgeführt werden, ist erfindungsgemäß jedoch weder erforderlich noch bevorzugt.

Die Hydrolyse und Polykondensation der Silane der allgemeinen Formel (I) kann in Abwesenheit oder Anwesenheit eines organischen Lösungsmittels durchgeführt werden. Vorzugsweise ist kein organisches Lösungsmittel vorhanden. Bei Einsatz eines organischen Lösungsmittels sind die Ausgangskomponenten vorzugsweise im Reaktionsmedium (das in der Regel Wasser einschließt) löslich. Als organische Lösungsmittel eignen sich insbesondere mit Wasser mischbare Lösungsmittel wie beispielsweise ein- oder mehrwertige aliphatische Alkohole (z.B. Methanol, Ethanol), Ether (wie Diethylether), Ester (wie Ethylacetat), Ketone, Amide, Sulfoxide und Sulfone. Diese Lösungsmittel können auch der fertigen Beschichtungszusammensetzung gegebenenfalls zugegeben werden, um eine für die Beschichtung geeignete Viskosität einzustellen.

Im übrigen können die Hydrolyse und Polykondensation gemäß den dem Fachmann geläufigen Modalitäten durchgeführt werden.

Die erfindungsgemäß eingesetzte Beschichtungszusammensetzung kann nach üblichen Beschichtungsmethoden auf die metallische Oberfläche aufgebracht werden. Anwendbare Techniken sind zum Beispiel das Tauchen, Gießen, Schleudern, Aufsprühen oder Aufstreichen. Besonders bevorzugt werden Tauchverfahren.

Anzumerken wäre noch, daß die thermische Verdichtung gegebenenfalls auch durch IR- oder Laser-Strahlung erfolgen kann. Es ist auch möglich, durch selektive Wärmeeinwirkung strukturierte Überzüge herzustellen.

Das erfindungsgemäße Verfahren eignet sich insbesondere - aber nicht ausschließlich - zur Beschichtung von Gegenständen des täglichen Gebrauchs, die eine metallische Oberfläche aufweisen bzw. aus Metall bestehen. So können metallische Oberflächen (z.B. Stahloberflächen) beschichtet werden, wie sie beispielsweise bei Blechen, Eßbestecken, Schüsseln, Ausgüssen, Tür- und Fenstergriffen und dergleichen vorzufinden sind.

Die vorliegende Erfindung stellt ein dekoratives System zur Verfügung, das vorteilhaft auf metallische Oberflächen (z.B. aus (Edel)stahl) aufgetragen werden kann, witterungsbeständig und kratzunempfindlich ist und insbesondere auch Verschmutzungen, z.B. durch Fingerabdrücke usw., vermeiden hilft.

Die folgenden Beispiele erläutern die Erfindung.

### Beispiel 1

### Herstellung eines SiO₂-Beschichtungssols

Eine Mischung von 20 ml Methyltriethoxysilan und 6 ml Tetraethoxylsilan wird vorgelegt und unter starkem Rühren werden 15 g Kieselsol (Bayer-Kieselsol Typ 300, 30 Gew.-% (auf 45 Gew.-% einkonzentriert)) zugegeben. Nachdem sich eine Emulsion gebildet hat (ca. 20 Sekunden), werden 0,3 ml H₃PO₄ (konz.) zum Start der Hydrolyse zugesetzt. Die Mischung bleibt noch 20 - 60 Sekunden trübe und wird anschließend schlagartig zuerst zäh-, dann dünnflüssig und klar. Während dieser Reaktion erwärmt sich das Sol auf ca. 40°C. Nach dem Abkühlen auf Raumtemperatur (gegebenenfalls im Eisbad) wird das resultierende Sol durch einen Filter mit einer Porengröße von 0,8 µm (mit einem Vorfilter mit einer Porengröße von 5 µm) filtriert. Das so hergestellte Sol kann z.B. mit Ethanol, Propanol oder Alkoholmischungen auf eine gewünschte Viskosität eingestellt werden und steht mindestens 6 Stunden zur Beschichtung zur Verfügung.

### Beispiel 2

### Herstellung eines Natriumsilikat-Beschichtungssols

25 ml (124,8 mMol) Methyltriethoxysilan (MTEOS) werden mit 7 ml (31,4 mMol) Tetraethoxysilan (TEOS) und 0,8 g (20 mMol) Natriumhydroxid über Nacht (mindestens 12 Stunden) bei Raumtemperatur gerührt, bis sich das gesamte Natriumhydroxid gelöst hat und eine klare gelbe Lösung vorliegt.

Anschließend werden 3,2 ml (177,8 mMol) Wasser bei Raumtemperatur langsam zugetropft, wobei sich die Lösung erwärmt. Nach Beendigung der Wasserzugabe wird die klare gelbe Lösung bei Raumtemperatur gerührt, bis sie wieder abgekühlt ist, und anschließend über einen Filter mit einer Porengröße von 0,8 µm filtriert.

### Beispiel 3

### Herstellung eines Kaliumsilikat-Beschichtungssols

Beispiel 2 wird wiederholt, jedoch werden anstelle von 0,8 g Natriumhydroxid 0,8 g (12,1 mMol) Kaliumhydroxid eingesetzt.

### Beispiel 4

Gereinigte Substrate (Edelstahl 1.4301, Messing und Aluminium) wurden mit einer Ziehgeschwindigkeit von 4 - 6 mm/s mit den in den Beispielen 1 bis 3 beschriebenen Beschichtungszusammensetzungen tauchbeschichtet, kurz (10 Minuten) bei Raumtemperatur vorgetrocknet und anschließend 1 Stunde bei 80°C getrocknet. Zum Verdichten wurden die getrockneten Substrate an Luft (bzw. unter Stickstoff im Fall der Beschichtung von Edelstahl mit der Beschichtungszusammensetzung aus Beispiel 1) mit einer Heizrate von 1K/Minute auf 500°C (bzw. 400°C im Fall von Aluminium) erhitzt und 1 Stunde bei dieser Temperatur gehalten.

Die Schichtdicken nach dem Verdichten betrugen 2 bis 4 µm. HREM-Untersuchungen der Beschichtungen auf Stahl und Aluminium zeigten eine defektfreie Schicht.

Das Anlaufen des Edelstahls beim Verdichten konnte durch die Beschichtung fast vollständig verhindert werden. Außerdem zeigte die Schicht selbst nach 1000 Stunden im Salznebel-Sprühtest noch keinerlei Beschädigungen.

Das beschichtete Messing und Aluminium zeigten nach 3000-stündigem Korrosionstest in der Salzsprühnebelkammer (DIN 50021) keinerlei Korrosionsschäden, während der nicht beschichtete Teil vollständig korrodiert war.

### Beispiel 5

### Standard-Antihaftmaterial MTKF 1 Mol-% FTS

Es werden 0,2 Mol (35,7 g) Methyltriethoxysilan (MTEOS) und 0,054 Mol (11,3 g) TEOS in einem geeigneten Gefäß (z.B. einer 250 ml-Schott-Flasche) gerührt und 0,1 Mol SiO₂ (in 20,0 g Kieselsol 300/30%) werden dazugegeben. Nach 5 Minuten werden 0,4 g konzentrierte HCl unter intensivem Rühren zugesetzt. Das zunächst zweiphasige Reaktionsgemisch wird nach 2 Minuten weiß, erwärmt sich und wird wieder transparent und einphasig. Nach einer Reaktionszeit von 15 Minuten werden 3,0 g DOWEX® 50W2 zugesetzt und das resultierende Gemisch wird 10 Minuten gerührt. Anschließend wird mit Hilfe einer Druckfiltration durch einen Glasfaservorfilter filtriert. Unmittelbar danach werden 1,78 g (1 Mol-% bezogen auf Si) 1H,1H,2H,2H-Perfluorooctyltriethoxysilan (FTS) zugesetzt und das Sol wird erneut 15 Minuten gerührt. Es werden 4,0 g Amberlyst® A-21 zugesetzt und für 30 Minuten gerührt. Nach Druckfiltration durch einen Membranfilter (Porengröße 1 µm) werden zur Verdünnung 140 g lsopropanol zugesetzt. Schließlich ist das Sol nach einer Druckfiltration durch einen Membranfilter (Porengröße 0,2 µm) beschichtungsfähig.

Die Auftragung des Sols auf eine Edelstahlfläche erfolgt mittels Sprühen und die Aushärtung erfolgt bei 350°C unter Luftatmosphäre. Bei dem Beschichtungsmaterial handelt es sich um eine transparente Antihaftschicht, die Kontaktwinkel von 110° gegen Wasser und von 60° gegen Hexadecan zeigt.

### Beispiel 6

### Alkalisch hydrolysiertes System mit 11 Mol-% FTS

Es werden 0,1 Mol (17,9 g) MTEOS, 0,027 Mol (5,6 g) TEOS und 0,016 Mol (8,16 g; 11 Mol-% bezogen auf Si) FTS in einer geeigneten Schott-Flasche vorgelegt. Anschließend werden unter Rühren 0,018 Mol NaOH (0,72 g) zugesetzt und für ca. 16 Stunden gerührt. Danach werden zu der inzwischen gelb gefärbten Lösung tropfenweise 0,15 Mol (2,7 g) H₂O gegeben. Nach beendeter Zugabe wird noch für etwa 30 Minuten gerührt. Abschließend wird mit 35 g Ethanol verdünnt und durch einen 1 µm-Filter mittels Druckfiltration filtriert.

Das fertige Sol wird mittels Sprühbeschichtung auf eine Edelstahlplatte aufgetragen und bei 350°C unter Luftatmosphäre ausgehärtet. Bei diesem System unterbleibt die ansonsten beobachtete Verfärbung von Edelstahlsubstraten bei diesen Temperaturen. Die Schicht ist vollständig transparent und zeigt Kontaktwinkel gegen Wasser von 95° und gegen Hexadecan von 40°.

## Patentansprüche

1. Verfahren zum Versehen einer metallischen Oberfläche mit einer glasartigen Schicht, **dadurch gekennzeichnet, daß** man eine Beschichtungszusammensetzung, die erhältlich ist durch ein Verfahren umfassend die Hydrolyse und Polykondensation eines oder mehrerer Silane der allgemeinen Formel (I)
RₙSiX₄₋ₙ (I)
worin die Gruppen X, gleich oder verschieden voneinander, hydrolysierbare Gruppen oder Hydroxylgruppen sind, die Reste R, gleich oder verschieden voneinander, für Wasserstoff, Alkyl-, Alkenyl- und Alkinylgruppen mit bis zu 12 Kohlenstoffatomen und Aryl-, Aralkyl- und Alkarylgruppen mit 6 bis 10 Kohlenstoffatomen stehen und n 0, 1 oder 2 bedeutet, mit der Maßgabe, daß mindestens ein Silan mit n = 1 oder 2 verwendet wird, oder davon abgeleiteter Oligomere, in Anwesenheit
a) nanoskaliger SiO₂-Teilchen und/oder
b) mindestens einer Verbindung aus der Gruppe der Oxide und Hydroxide der Alkali- und Erdalkalimetalle
auf die metallische Oberfläche aufbringt und die resultierende Beschichtung thermisch bei einer Temperatur von mindestens 350°C zu einer transparenten, glasartigen Schicht verdichtet.

2. Verfahren nach Anspruch 1, **dadurch gekennzeichnet, daß** der Durchschnittswert von n in den Ausgangssilanen der allgemeinen Formel (I) 0,2 bis 1,5, insbesondere 0,5 bis 1,0, beträgt.

3. Verfahren nach irgendeinem der Ansprüche 1 und 2, **dadurch gekennzeichnet, daß** in den Ausgangssilanen der allgemeinen Formel (I) X für Alkoxy, insbesondere C₁₋₄-Alkoxy, steht.

4. Verfahren nach Anspruch 3, **dadurch gekennzeichnet, daß** X für Methoxy oder Ethoxy steht.

5. Verfahren nach irgendeinem der Ansprüche 1 bis 4, **dadurch gekennzeichnet, daß** R für C₁₋₄-Alkyl, insbesondere Methyl oder Ethyl, oder Phenyl steht.

6. Verfahren nach irgendeinem der Ansprüche 1 bis 5, **dadurch gekennzeichnet, daß** als Ausgangssilane der Formel (I) (M)ethyltri(m)ethoxysilan und Tetra(m)ethoxysilan in Kombination eingesetzt werden.

7. Verfahren nach irgendeinem der Ansprüche 1 bis 6, **dadurch gekennzeichnet, daß** mindestens eines der eingesetzten Ausgangssilane der allgemeinen Formel (I) einen fluorierten Rest R aufweist.

8. Verfahren nach irgendeinem der Ansprüche 1 bis 7, **dadurch gekennzeichnet, daß** in Variante (a) die nanoskaligen SiO₂-Teilchen in einer solchen Menge eingesetzt werden, daß das Verhältnis aller Si-Atome in den Ausgangssilanen der Formel (I) zu allen Si-Atomen in den SiO₂-Teilchen im Bereich von 5:1 bis 1:2, insbesondere von 4:1 bis 2:1, liegt

9. Verfahren nach irgendeinem der Ansprüche 1 bis 8, **dadurch gekennzeichnet, daß** in Variante (b) die mindestens eine Verbindung aus der Gruppe der Oxide und Hydroxide der Alkali- und Erdalkalimetalle mindestens ein Oxid bzw. Hydroxid von Li, Na, K, Mg, Ca oder Ba umfaßt.

10. Verfahren nach Anspruch 9, **dadurch gekennzeichnet, daß** die Verbindung aus Natriumhydroxid und Kaliumhydroxid ausgewählt wird.

11. Verfahren nach irgendeinem der Ansprüche 1 bis 10, **dadurch gekennzeichnet, daß** das Alkalimetalloxid bzw. -hydroxid in einer solchen Menge eingesetzt wird, daß das Atomverhältnis Si:Alkalimetall im Bereich von 20:1 bis 5:1, insbesondere von 15:1 bis 10:1, liegt.

12. Verfahren nach irgendeinem der Ansprüche 1 bis 11, **dadurch gekennzeichnet, daß** die auf die metallische Oberfläche aufgebrachte Beschichtungszusammensetzung vor der thermischen Verdichtung getrocknet wird.

13. Verfahren nach irgendeinem der Ansprüche 1 bis 12, **dadurch gekennzeichnet, daß** die thermische Verdichtung bei Temperaturen von mindestens 500°C erfolgt.

14. Verfahren nach irgendeinem der Ansprüche 1 bis 13, **dadurch gekennzeichnet, daß** die Schichtdicke nach der thermischen Verdichtung 1 bis 10 µm, vorzugsweise 2 bis 7 µm, beträgt.

15. Verfahren nach irgendeinem der Ansprüche 1 bis 14, **dadurch gekennzeichnet, daß** nach der Trocknung oder thermischen Verdichtung des Überzugs mindestens eine weitere Beschichtungszusammensetzung, die bei der thermischen Verdichtung zu einer gefärbten glasartigen Schicht führt, aufgebracht und thermisch verdichtet wird.

16. Verfahren nach irgendeinem der Ansprüche 1 bis 15, **dadurch gekennzeichnet, daß** es sich bei der metallischen Oberfläche um eine solche aus einer Metallegierung, insbesondere aus (Edel)stahl, Messing oder Bronze, handelt.

17. Verfahren nach irgendeinem der Ansprüche 1 bis 16, **dadurch gekennzeichnet, daß** es sich bei der metallischen Oberfläche um eine solche aus Aluminium, Zinn, Zink, Chrom oder Nickel handelt.

18. Verfahren nach irgendeinem der Ansprüche 1 bis 17, bei dem Bleche oder Eßbestecke, Kochgeschirr, Ausgüsse oder Tür- und Fenstergriffe mit einer glasartigen Beschichtung versehen werden.

19. Gegenstände mit einer nach dem Verfahren gemäß irgendeinem der Ansprüche 1 bis 18 mit einer glasartigen Schicht versehenen metallischen Oberfläche.

## Claims

1. Process for providing a metallic surface with a vitreous layer, **characterized in that** a coating composition which is obtainable by a process comprising the hydrolysis and polycondensation of one or more silanes of the general formula (I)
RₙSiX₄₋ₙ (I)
wherein the groups X, the same or different from each other, are hydrolyzable groups or hydroxyl groups, the radicals R, the same or different from each other, represent hydrogen, alkyl, alkenyl or alkynyl groups having up to 12 carbon atoms and aryl, aralkyl and alkaryl groups having 6 to 10 carbon atoms, and n is 0, 1 or 2, provided that at least one silane with n = 1 or 2 is employed, or oligomers derived therefrom, in the presence of
a) nanoscaled SiO₂ particles and/or
b) at least one compound selected from the group consisting of oxides and hydroxides of the alkali and alkaline earth metals;
is applied onto said metallic surface and the resulting coating is thermally densified at a temperature of at least 350°C to form a transparent vitreous layer.

2. Process according to claim 1, **characterized in that** the average value of n in the starting silanes of the general formula (I) ranges from 0.2 to 1.5, particularly from 0.5 to 1.0.

3. Process according to any one of claims 1 and 2, **characterized in that** in the starting silanes of general formula (I) X represents alkoxy, particularly C₁₋₄ alkoxy.

4. Process according to claim 3, **characterized in that** X is methoxy or ethoxy.

5. Process according to any one of claims 1 to 4, **characterized in that** R represents C₁₋₄ alkyl, particularly methyl or ethyl, or phenyl.

6. Process according to any one of claims 1 to 5, **characterized in that** (m)ethyltri(m)ethoxy silane and tetra(m)ethoxy silane are used in combination as starting silanes of formula (I).

7. Process according to any one of claims 1 to 6, **characterized in that** at least one of the starting silanes of general formula (I) employed has a fluorinated radical R.

8. Process according to any one of claims 1 to 7, **characterized in that** in variant (a) the nanoscaled SiO₂ particles are employed in such an amount that the ratio of total Si-atoms in the starting silanes of formula (I) to total Si-atoms in the SiO₂ particles ranges from 5:1 to 1:2, particularly from 4:1 to 2:1.

9. Process according to any one of claims 1 to 8, **characterized in that** in variant (b) said at least one compound selected from the group consisting of oxides and hydroxides of the alkali and alkaline earth metals comprises at least one oxide or hydroxide, respectively, of Li, Na, K, Mg, Ca or Ba.

10. Process according claim 9, **characterized in that** said compound is selected from sodium hydroxide and potassium hydroxide.

11. Process according to any one of claims 1 to 10, **characterized in that** said alkali metal oxide or hydroxide, respectively, is employed in such an amount that the atomic ratio Si:alkali metal ranges from 20:1 to 5:1, particularly from 5:1 to 10:1.

12. Process according to any one of claims 1 to 11, **characterized in that** the coating composition applied on the metallic surface is dried prior to its thermal densification.

13. Process according to any one of claims 1 to 12, **characterized in that** said thermal densification is carried out at temperatures of at least 500°C.

14. Process according to any one of claims 1 to 13, **characterized in that** the thickness of the layer after the thermal densification ranges from 1 to 10 µm, preferably from 2 to 7 µm.

15. Process according to any one of claims 1 to 14, **characterized in that** after the drying or thermal densification of the coating at least one further coating composition which upon thermal densification results in a colored vitreous layer is applied and thermally densified.

16. Process according to any one of claims 1 to 15, **characterized in that** said metallic surface is one of a metal alloy, particularly of (stainless) steel, brass or bronze.

17. Process according to any one of claims 1 to 15, **characterized in that** said metallic surface is one of aluminum, tin, zinc, chromium or nickel.

18. Process according to any one of claims 1 to 17, wherein panels or cuttlery, cooking utensils, sinks or door and window handles are provided with a vitreous layer.

19. Articles featuring a metallic surface which is provided with a vitreous layer according to the process of any one of claims 1 to 18.

## Revendications

1. Procédé pour munir une surface métallique d'une couche vitreuse, **caractérisé en ce que** l'on applique sur la surface métallique une composition de revêtement que l'on peut obtenir par un procédé comprenant l'hydrolyse et la polycondensation d'un ou plusieurs silanes de formule générale (I)
RₙSiX₄₋ₙ (I)
dans laquelle les groupes X sont identiques ou différents et représentent chacun un groupe hydroxyle ou un groupe hydrolysable, les groupes R sont identiques ou différents et représentent chacun un atome d'hydrogène, un groupe alkyle, alcényle ou alcynyle ayant jusqu'à 12 atomes de carbone, ou un groupe aryle, aralkyle ou alkylaryle ayant 6 à 10 atomes de carbone, et n est égal à 0, 1 ou 2, étant entendu que l'on utilise au moins un silane pour lequel n est égal à 1 ou 2, ou d'oligomères qui en dérivent, en présence de a) des particules de SiO₂ d'une taille à l'échelle du nanomètre et/ou b) au moins un composé pris parmi les oxydes et les hydroxydes des métaux alcalins et des métaux alcalino-terreux, et **en ce que** l'on rend le revêtement résultant étanche en le chauffant à une température d'au moins 350 °C et en le transformant ainsi en une couche vitreuse transparente.

2. Procédé selon la revendication 1, **caractérisé en ce que** la valeur moyenne de n des silanes de départ de formule générale (I) est de 0,2 à 1,5, en particulier de 0,5 à 1,0.

3. Procédé selon la revendication 1 ou 2, **caractérisé en ce que** le groupe X de la formule générale (I) des silanes de départ représente un groupe alcoxy, en particulier un groupe alcoxy en C₁ à C₄.

4. Procédé selon la revendication 3, **caractérisé en ce que** X représente un groupe méthoxy ou éthoxy.

5. Procédé selon l'une quelconque des revendications 1 à 4, **caractérisé en ce que** R représente un groupe alkyle en C₁ à C₄, en particulier un groupe méthyle ou éthyle, ou un groupe phényle.

6. Procédé selon l'une quelconque des revendications 1 à 5, **caractérisé en ce que** l' on utilise comme silanes de départ de formule (I), du (M)éthyltri(m)éthoxysilane et du tétra(m)éthoxysilane en combinaison.

7. Procédé selon l'une quelconque des revendications 1 à 6, **caractérisé en ce qu'**au moins l'un des silanes de départ utilisés de formule générale (I) contient un groupe R fluoré.

8. Procédé selon l'une quelconque des revendications 1 à 7, **caractérisé en ce que**, dans la variante (a), on utilise les particules de SiO₂ d'une taille à l'échelle du nanomètre en une quantité telle que le rapport de tous les atomes de silicium des silanes de départ de formule (I) à tous les atomes de silicium des particules de SiO₂ est compris dans l'intervalle allant de 5:1 à 1:2, en particulier dans l'intervalle allant de 4:1 à 2:1.

9. Procédé selon l'une quelconque des revendications 1 à 8, **caractérisé en ce que**, dans la variante (b), le au moins un composé pris parmi les oxydes et les hydroxydes des métaux alcalins et des métaux alcalino-terreux comprend au moins un oxyde ou un hydroxyde de Li, Na, K, Mg, Ca ou Ba.

10. Procédé selon la revendication 9, **caractérisé en ce que** le composé est choisi parmi l'hydroxyde de sodium et l'hydroxyde de potassium.

11. Procédé selon l'une quelconque des revendications 1 à 10, **caractérisé en ce que** l'on utilise l'oxyde ou l'hydroxyde de métal alcalin en une quantité telle que le rapport des atomes de silicium aux atomes de métal alcalin est compris dans l'intervalle allant de 20:1 à 5:1, en particulier dans l'intervalle allant de 15:1 à 10:1.

12. Procédé selon l'une quelconque des revendications 1 à 11, **caractérisé en ce que** la composition de revêtement appliquée sur la surface métallique est séchée avant d'être rendue étanche par le procédé thermique.

13. Procédé selon l'une quelconque des revendications 1 à 12, **caractérisé en ce que** l'étanchéification par chauffage est réalisée à une température d'au moins 500 °C.

14. Procédé selon l'une quelconque des revendications 1 à 13, **caractérisé en ce que** l'épaisseur de la couche après l'étanchéification par chauffage est de 1 à 10 µm, de préférence de 2 à 7 µm.

15. Procédé selon l'une quelconque des revendications 1 à 14, **caractérisé en ce que**, après le séchage ou l'étanchéification par chauffage du revêtement, on applique et on étanchéifie par chauffage au moins une autre composition de revêtement qui donne lors de l'étanchéification par chauffage une couche vitreuse colorée.

16. Procédé selon l'une quelconque des revendications 1 à 15, **caractérisé en ce que** la surface métallique est une surface en alliage métallique, en particulier en acier, en acier spécial, en laiton ou en bronze.

17. Procédé selon l'une quelconque des revendications 1 à 15, **caractérisé en ce que** la surface métallique est une surface en aluminium, en étain, en zinc, en chrome ou en nickel.

18. Procédé selon l'une quelconque des revendications 1 à 17, lors duquel des tôles ou des couverts, des casseroles, des éviers ou des poignées de porte ou de fenêtre sont munis d'un revêtement vitreux.

19. Objets présentant une surface métallique munie d'une couche vitreuse par le procédé selon l'une quelconque des revendications 1 à 18.
